(19) Europäisches Patentamt

European Patent Office

Office européen des brevets

(11) **EP 1 019 323 B1**

(12) **FASCICULE DE BREVET EUROPEEN**

(45) Date de publication et mention
de la délivrance du brevet:
**04.12.2002 Bulletin 2002/49**

(51) Int Cl.[7]: **C01F 17/00**, C08K 3/30,
C09D 7/12

(21) Numéro de dépôt: **98941573.2**

(22) Date de dépôt: **07.08.1998**

(86) Numéro de dépôt international:
**PCT/FR98/01775**

(87) Numéro de publication internationale:
**WO 99/007639 (18.02.1999 Gazette 1999/07)**

(54) **COMPOSITION A BASE D'UN SESQUISULFURE DE SAMARIUM, PROCEDE DE PREPARATION ET UTILISATION COMME PIGMENT COLORANT**

ZUSAMMENSETZUNGEN AUF BASIS VON SAMARIUMSESQUISULFID, VERFAHREN ZU DEREN HERSTELLUNG UND VERWENDUNG ALS FARBPIGMENT

COMPOSITION BASED ON SAMARIUM SESQUISULPHIDE, PREPARATION METHOD AND USE AS COLOURING PIGMENT

(84) Etats contractants désignés:
**AT BE CH CY DE DK ES FI FR GB IE IT LI NL SE**

(30) Priorité: **08.08.1997 FR 9710229**

(43) Date de publication de la demande:
**19.07.2000 Bulletin 2000/29**

(73) Titulaire: **RHODIA CHIMIE**
**92408 Courbevoie Cédex (FR)**

(72) Inventeurs:
• **BUSNOT, Sylvain**
**F-60157 Elincourt Sainte Marguerite (FR)**
• **MACAUDIERE, Pierre**
**F-92600 Asnières-sur-Seine (FR)**

(74) Mandataire: **Dubruc, Philippe et al**
**Rhodia Services,**
**Direction de la Propriété Industrielle,**
**40, rue de la Haie-Coq**
**93306 Aubervilliers Cedex (FR)**

(56) Documents cités:
**EP-A- 0 203 838**     **EP-A- 0 545 746**
**EP-A- 0 680 930**     **WO-A- 97/11031**
**FR-A- 2 139 620**

• **M.SATO: "Preparation and structure of sodium rare-earth sulfides, NaLnS2." MATERIALS RESEARCH BULLETIN, vol. 19, no. 9, 1984, pages 1215-1220, XP002062475**

**Description**

La présente invention concerne une composition à base d'un sesquisulfure de samarium, son procédé de préparation et son utilisation comme pigment colorant.

Les pigments minéraux de coloration sont déjà largement utilisés dans de nombreuses industries notamment dans celles des peintures, des matières plastiques et des céramiques. Dans de telles applications, les propriétés que sont, entre autres, la stabilité thermique et/ou chimique, la dispersabilité (aptitude du produit à se disperser correctement dans un milieu donné), la compatibilité avec le milieu à colorer, la couleur intrinsèque, le pouvoir de coloration et le pouvoir opacifiant, constituent autant de critères particulièrement importants à prendre en considération dans le choix d'un pigment convenable.

Malheureusement, le problème est que la plupart des pigments minéraux qui conviennent pour des applications telles que ci-dessus et qui sont effectivement utilisés à ce jour à l'échelle industrielle, font généralement appel à des métaux (cadmium, plomb, chrome, cobalt notamment) dont l'emploi devient de plus en plus sévèrement réglementé, voire interdit, par les législations de nombreux pays, compte tenu en effet de leur toxicité réputée très élevée. On peut ainsi plus particulièrement citer, à titre d'exemples non limitatifs, le cas des pigments jaunes du type chromate de plomb ou sulfure de cadmium.

On voit donc qu'il y a un besoin important de nouveaux pigments minéraux de substitution.

Dans ce but et selon un premier mode de réalisation, la composition de l'invention est caractérisée en ce qu'elle est à base d'un sesquisulfure de samarium, en ce qu'elle présente une pureté en samarium vis à vis d'autres terres rares supérieure à 99% et en ce qu'elle contient au moins un élément alcalin ou alcalino-terreux dont une partie au moins est incluse dans le réseau cristallin dudit sesquisulfure.

Selon un second mode de réalisation, la composition de l'invention est caractérisée en ce qu'elle est à base d'un sesquisulfure de samarium et d'au moins une terre rare qui est seulement trivalente et en ce qu'elle contient au moins un élément alcalin ou alcalino-terreux dont une partie au moins est incluse dans le réseau cristallin dudit sesquisulfure.

Selon un troisième mode de réalisation de l'invention, la composition de l'invention est caractérisée en ce qu'elle est à base d'un sesquisulfure de samarium, en ce qu'elle présente une pureté en samarium telle que la teneur en cérium soit inférieure à 1% et en ce qu'elle contient au moins un élément alcalin ou alcalino-terreux dont une partie au moins est incluse dans le réseau cristallin dudit sesquisulfure.

L'invention concerne aussi un procédé de préparation de la composition selon le premier mode de réalisation, ce procédé est caractérisé en ce qu'on fait réagir un composé du samarium présentant une pureté en samarium vis à vis d'autres terres rares supérieure à 99% et au moins un composé d'un élément alcalin ou alcalino-terreux avec un mélange gazeux de sulfure d'hydrogène et de sulfure de carbone.

L'invention concerne aussi le procédé de préparation d'une composition selon le second mode de réalisation, ce procédé est caractérisé en ce qu'on fait réagir un composé du samarium, un composé de la terre rare trivalente et au moins un composé d'un élément alcalin ou alcalino-terreux avec un mélange gazeux de sulfure d'hydrogène et de sulfure de carbone.

L'invention concerne aussi un procédé de préparation de la composition selon le troisième mode de réalisation, ce procédé est caractérisé en ce qu'on fait réagir un composé du samarium présentant une pureté en samarium telle que la teneur en cérium soit inférieure à 1%, et au moins un composé d'un élément alcalin ou alcalino-terreux avec un mélange gazeux de sulfure d'hydrogène et de sulfure de carbone.

Les compositions de l'invention présentent une couleur jaune soutenue.

Les documents EP-A-545 746 et EP-A-680 930 décrivent un sulfure de samarium dont la couleur est brun-gris.

D'autres caractéristiques, détails et avantages de l'invention apparaîtront encore plus complètement à la lecture de la description qui va suivre, ainsi que des divers exemples concrets mais non limitatifs destinés à l'illustrer.

La composition selon le premier mode de réalisation de l'invention va maintenant être décrite.

Cette composition est à base d'un sesquisulfure de samarium de formule $Sm_2S_3$. Il s'agit d'un sesquisulfure de type $\gamma$.

Une caractéristique de la composition selon ce premier mode est la pureté du samarium. La composition doit présenter une pureté en samarium mesurée par rapport aux autres terres rares supérieure à 99%. Cette pureté peut être d'au moins 99,5% et plus particulièrement d'au moins 99,9%.

Ici et pour l'ensemble de la description, les puretés sont données en poids d'oxydes des éléments samarium, cérium et autres terres rares.

Par terre rare on entend pour l'ensemble de la description les éléments du groupe constitué par l'yttrium et les éléments de la classification périodique de numéro atomique compris inclusivement entre 57 et 71.

On sait que le samarium, de par ses procédés de préparation et de séparation, comporte des impuretés qui sont essentiellement d'autres terres rares. Le samarium présente habituellement une pureté de l'ordre de 98,5%. Une telle pureté est insuffisante dans le cadre de la présente invention pour obtenir un pigment d'une couleur jaune améliorée.

La composition de l'invention comprend en outre un élément alcalin ou alcalino-terreux. L'élément alcalin peut être plus particulièrement le lithium ou le sodium. L'élément alcalino-terreux peut être plus particulièrement le strontium ou le calcium. Bien entendu, le sesquisulfure de la composition de l'invention peut comprendre plusieurs éléments alcalins et/ou alcalino-terreux et, par conséquent, tout ce qui est décrit par la suite en référence à un alcalin ou un alcalino-terreux s'applique aussi au cas où plusieurs alcalins et/ou alcalino-terreux sont présents.

Selon une autre caractéristique de l'invention, cet élément alcalin ou alcalino-terreux est inclus au moins en partie dans le réseau cristallin du sesquisulfure. Selon une variante, l'élément alcalin ou alcalino-terreux est inclus essentiellement ou totalement dans le réseau cristallin.

Le sesquisulfure de la composition de l'invention peut posséder notamment une structure cristallographique cubique de type $Th_3P_4$, qui présente des lacunes au niveau du réseau des cations; cette structure lacunaire peut être symbolisée en donnant aux sesquisulfures la formule $M_{10,66}[\ ]_{1,33}S_{16}$.

Selon l'invention, un ou des éléments alcalins ou alcalino-terreux peuvent être introduits dans ces lacunes cationiques, jusqu'à saturation ou non de ces dernières. La présence de ces éléments au sein du sesquisulfure peut être mise en évidence par simple analyse chimique. Par ailleurs, les analyses en diffraction X montrent qu'il y a conservation de la phase cristalline en $Th_3P_4$ du sesquisulfure, avec dans certains cas, une modification plus ou moins importante des paramètres de maille, fonction à la fois de la nature et de la quantité de l'élément alcalin ou alcalino-terreux introduit.

La composition selon le second mode de réalisation de l'invention est à base d'un sesquisulfure de samarium et d'au moins une autre terre rare seulement trivalente. Par terre rare seulement trivalente on entend une terre rare qui ne peut présenter que cette seule valence et donc une terre rare qui ne peut pas passer à l'état di ou tétravalent. Comme exemple d'une telle terre rare seulement trivalente, on peut mentionner le lanthane, le gadolinium ou le dysprosium.

Le rapport atomique terre rare trivalente/ terre rare trivalente et samarium peut varier dans une large gamme. Il est généralement d'au plus 90%. Ce rapport peut être plus particulièrement d'au plus 50%.

La composition selon ce second mode peut être par ailleurs préparée à partir d'un samarium présentant la puretée mentionnée dans la description du premier mode.

Pour le troisième mode de réalisation de l'invention, la caractéristique de la composition de l'invention réside dans la pureté du samarium vis à vis du cérium. Comme indiqué plus haut, la teneur en cérium doit être inférieure à 1%.

Tout ce qui a été décrit plus haut pour le premier mode de réalisation en ce qui concerne la structure du sesquisulfure, les éléments alcalins ou alcalino-terreux et leur inclusion dans le réseau cristallin du sesquisulfure s'applique aussi au second mode et au troisième mode de réalisation.

Généralement, la quantité d'élément alcalin est d'au plus 30% de la quantité atomique de l'ensemble des terres rares du sesquisulfure (samarium, terre rare trivalente et autres terres rares) et de préférence d'au plus 20%. Cette quantité est de préférence au moins égale à 0,1%.

La quantité d'élément alcalino-terreux est d'au plus 50% exprimée comme précédemment.

Des variantes qui concernent les différents modes de réalisation de l'invention vont maintenant être décrites.

Les compositions de l'invention peuvent présenter une granulométrie spécifique. Ainsi, elles peuvent être à base d'un sesquisulfure qui est constitué essentiellement de grains entiers de taille moyenne d'au plus 1,5 micron, plus particulièrement d'au plus 1 micron. Par grain entier, on entend un grain qui n'a pas été rompu ou brisé. Des grains peuvent en effet être brisés ou rompus lors d'un broyage. Les photos en microscopie électronique à balayage permettent de montrer que les grains n'ont pas été brisés. Il faut aussi noter que le sesquisulfure de la composition de l'invention est désagglomérable, c'est à dire que s'il ne se présente pas directement sous forme de grains entiers, il peut se présenter sous forme d'agglomérats pouvant être constituées de grains agglomérés et/ou légèrement frittés qui peuvent donner par désagglomération dans des conditions douces les grains entiers. Les grains entiers peuvent être par ailleurs des grains monocristallins.

En ce qui concerne plus précisément la granulométrie des compositions de l'invention, celles-ci présentent habituellement une taille moyenne de particules généralement inférieure à 2µm, plus particulièrement comprise entre 0,7 et 1,5 µm. Après une désagglomération dans des conditions douces, on peut obtenir les grains précités dont la taille moyenne peut être d'au plus 1,5µm et avantageusement comprise entre 0,6 et 0,8µm. La taille de particules est mesurée par la technique de diffraction laser en utilisant un granulomètre du type CILAS (HR 850 répartition en volume).

Selon une autre variante, la composition de l'invention comprend en surface des particules ou des grains qui la constituent, une couche à base d'au moins un oxyde transparent. On pourra se référer en ce qui concerne un produit de ce type comprenant une telle couche, à la demande de brevet européen EP-A-620254, au nom de la Demanderesse, dont l'enseignement est incorporé ici.

Cette couche périphérique enrobant le support peut ne pas être parfaitement continue ou homogène. Toutefois, de préférence, les compositions selon cette variante comprennent une couche de revêtement uniforme et d'épaisseur contrôlée d'oxyde transparent, et ceci de manière à ne pas altérer la couleur originelle de la composition avant enrobage.

Par oxyde transparent, on entend ici un oxyde qui, une fois déposé sur la particule ou le grain sous la forme d'une pellicule plus ou moins fine, n'absorbe que peu ou pas du tout les rayons lumineux dans le domaine du visible, et ceci de manière à ne pas ou peu masquer la couleur intrinsèque d'origine de la particule ou du grain. En outre, il convient de noter que le terme oxyde, qui est utilisé par commodité dans l'ensemble de la présente description concernant cette variante, doit être entendu comme couvrant également des oxydes du type hydraté.

Ces oxydes, ou oxydes hydratés, peuvent être amorphes et/ou cristallisés.

A titre d'exemple de tels oxydes, on peut plus particulièrement citer l'oxyde de silicium (silice), l'oxyde d'aluminium (alumine), l'oxyde de zirconium (zircone), l'oxyde de titane, le silicate de zirconium $ZrSiO_4$ (zircon) et les oxydes de terres rares. Selon une variante préférée, la couche enrobante est à base de silice. De manière encore plus avantageuse, cette couche est essentiellement, et de préférence uniquement, constituée de silice.

Selon une autre variante, la composition peut contenir des atomes de fluor.

Dans ce cas, on pourra aussi se référer en ce qui concerne la disposition des atomes de fluor à la demande de brevet européen EP-A-628608, au nom de la Demanderesse, dont l'enseignement est incorporé ici.

Les compositions fluorées peuvent présenter au moins l'une des caractéristiques suivantes :

- les atomes de fluor sont distribués selon un gradient de concentration décroissant de la surface au coeur des particules ou grains constituant lesdites compositions.
- les atomes de fluor sont majoritairement répartis à la périphérie externe des particules ou grains constituant les compositions. On entend ici par périphérie externe une épaisseur de matière mesurée à partir de la surface de la particule, de l'ordre de quelques centaines d'Angstrôms. On entend en outre par majoritairement que plus de 50% des atomes de fluor présents dans le sesquisulfure se trouvent dans ladite périphérie externe.
- le pourcentage en poids des atomes de fluor présents dans les compositions n'excède pas 10%, et de préférence 5%.
- les atomes de fluor sont présents sous la forme de composés fluorés ou sulfofluorés, en particulier sous la forme de fluorures de terres rares ou de sulfofluorures (thiofluorures) de terres rares.

Selon une autre variante, les compositions de l'invention peuvent comprendre en outre un composé du zinc, ce composé du zinc pouvant être plus particulièrement déposé à la surface des particules ou des grains constituant ces compositions. On pourra se référer pour cette variante à la demande de brevet français FR-A--2741629, au nom de la Demanderesse, dont l'enseignement est incorporé ici.

Ce composé du zinc peut être obtenu par réaction d'un précurseur du zinc avec de l'ammoniaque et/ou un sel d'ammonium. La forme sous laquelle se présente ce composé du zinc dans la composition n'est pas connue précisément. Dans certains cas toutefois, on peut penser que le zinc est présent sous la forme d'un complexe zinc-ammoniaque de formule $Zn(NH_3)_x(A)_y$ dans laquelle A représente un anion comme $OH^-$, $Cl^-$, l'anion acétate ou encore un mélange d'anions, x étant au plus égal à 4 et y égal à 2.

Bien entendu, l'invention concerne aussi la combinaison des variantes qui ont été décrites précédemment. Ainsi, on peut envisager une composition dont les particules ou les grains comprennent une couche d'oxyde avec en outre des atomes de fluor, ces compositions pouvant en outre contenir du zinc. En particulier, pour les compositions comprenant une couche d'oxyde, le zinc peut être inclus dans la couche d'oxyde ou situé à la surface de celle-ci.

Le procédé de préparation des compositions de l'invention va maintenant être décrit.

Le procédé consiste à faire réagir des composés de départ avec un mélange gazeux de sulfure d'hydrogène et de sulfure de carbone. Dans le cas de la préparation d'une composition selon le premier mode de réalisation, le composé du samarium est un composé qui doit présenter la pureté requise en samarium, c'est à dire une pureté supérieure à 99% et d'au moins 99,5% et plus particulièrement d'au moins 99,9% selon la composition recherchée. Dans le cas de la préparation d'une composition selon le second mode de réalisation, on utilise, outre un composé de samarium, un composé de la terre rare trivalente. Dans le cas du troisième mode de réalisation, on utilise un composé de samarium présentant la teneur requise en cérium (<1%). Dans les trois cas, on utilise en outre un composé d'un élément alcalin et/ou d'un élément alcalino-terreux.

Les composés de samarium et de terre rare peuvent être des oxydes ou des composés oxycarbonés comme des oxalates, acétates, malonates ou tartrates. Les composés d'alcalins ou d'alcalino-terreux peuvent être du même type, ce peut être en outre des sulfures ou polysulfures, ou encore des sulfates.

Selon une variante préférée, on utilise comme composé du samarium et éventuellement de la terre rare trivalente, un carbonate ou un hydroxycarbonate. Il est aussi avantageux d'utiliser un carbonate alcalin ou alcalino-terreux. De tels composés de départ permettent d'obtenir des compositions de granulométrie plus fine ou constituées essentiellement de grains entiers comme décrit plus haut. Le cas échéant, un carbonate ou hydroxycarbonate mixte de samarium et de la terre rare trivalente peut être employé.

Il est aussi possible d'utiliser un carbonate ou un hydroxycarbonate de samarium et/ou de terre rare préalablement imprégné d'un élément alcalin ou alcalino-terreux. On forme dans ce cas une solution aqueuse d'un sel ou d'un hydroxyde alcalin ou alcalino-terreux et on imprègne le carbonate ou l'hydroxycarbonate de samarium et/ou de terre rare avec la solution puis on sèche.

Le mélange de gaz sulfurant peut être mis en oeuvre avec un gaz inerte comme l'argon ou l'azote.

Le chauffage peut se faire à une température comprise entre 500 et 1200°C et plus particulièrement entre 600 et 900°C.

La durée du chauffage correspond au temps nécessaire pour l'obtention du sesquisulfure désiré et cette durée est d'autant plus courte que la température est élevée. A titre d'exemple, cette durée peut aller de deux heures environ pour une température de 500°C à une heure environ pour une température de 800°C.

La réaction se fait généralement avec une pression partielle du sulfure d'hydrogène et du sulfure de carbone qui est comprise entre $0,1.10^5$ et $1.10^5$Pa.

Enfin, le procédé peut être mis en oeuvre dans un réacteur ouvert.

Le produit obtenu à l'issue du chauffage présente habituellement une granulométrie convenable pour l'utilisation comme pigment. Cependant, si on souhaite obtenir une granulométrie plus fine, le produit peut être désaggloméré. Comme on l'a mentionné précédemment, une désagglomération dans des conditions douces, par exemple un broyage du type jet d'air, est suffisante pour obtenir une taille moyenne qui peut être inférieure à 1,5µm et par exemple d'au plus 1µm et avantageusement comprise entre 0,6 et 0,8µm.

Pour les variantes qui ont été décrites plus haut et pour lesquelles les compositions comprennent un oxyde transparent, du fluor et/ou un composé du zinc, on prépare ces compositions en mettant en oeuvre les procédés décrit dans les demandes de brevet précitées EP-A-620254, EP-A-628608 et FR-A-2741629.

Dans le cas de la préparation d'une composition comprenant un oxyde transparent, le procédé consiste essentiellement à mettre en contact la composition initiale avec un précurseur de l'oxyde transparent précité et à précipiter l'oxyde transparent. On entend par composition initiale ici et pour la suite de la description, la composition telle qu'obtenue à la suite de la réaction des composés de samarium, de terre rare trivalente éventuellement, et des composés d'alcalin ou d'alcalino-terreux avec le mélange gazeux sulfurant et après désagglomération éventuelle.

Des exemples de procédés vont être donnés ci-dessous pour les différents types d'oxydes transparents.

Dans le cas de la silice on peut mentionner la préparation de la silice par hydrolyse d'un alkyl-silicate, en formant un milieu réactionnel par mélange d'eau, d'alcool, de la composition qui est alors mis en suspension, et éventuellement d'une base, d'un fluorure alcalin ou d'un fluorure d'ammonium qui peut jouer le rôle de catalyseur de la condensation du silicate. On introduit ensuite l'alkyl-silicate. On peut encore effectuer une préparation par réaction de la composition, d'un silicate, du type silicate alcalin, et d'un acide.

Dans le cas d'une couche à base d'alumine, on peut faire réagir la composition, un aluminate et un acide, ce par quoi on précipite de l'alumine. Cette précipitation peut aussi être obtenue en mettant en présence et en faisant réagir la composition, un sel d'aluminium et une base.

Enfin, on peut former l'alumine par hydrolyse d'un alcoolate d'aluminium.

Pour ce qui est de l'oxyde de titane, on peut le précipiter en introduisant dans une suspension hydroalcoolique de la composition un sel de titane d'une part tel que $TiCl_4$, $TiOCl_2$ ou $TiOSO_4$, et une base d'autre part. On peut aussi opérer par exemple par hydrolyse d'un titanate d'alkyle ou précipitation d'un sol de titane.

Enfin, dans le cas d'une couche à base d'oxyde de zirconium, il est possible de procéder par cohydrolyse ou coprécipitation d'une suspension de la composition en présence d'un composé organométallique du zirconium, par exemple un alcoxyde de zirconium comme l'isopropoxyde de zirconium.

La composition contenant du fluor est obtenue en soumettant la composition initiale à un traitement de fluoration.

Ce traitement de fluoration peut être réalisé selon toute technique connue en soi.

En particulier, l'agent de fluoration peut être liquide, solide ou gazeux. De préférence, on opère sous des conditions de traitement où l'agent de fluoration est liquide ou gazeux.

A titre d'exemples d'agents fluorants convenant pour la mise en oeuvre du traitement , on peut plus particulièrement citer le fluor $F_2$, les fluorures d'alcalins, le fluorure d'ammonium, les fluorures de gaz rares, le fluorure d'azote $NF_3$, le fluorure de bore $BF_3$, le tétrafluorométhane, l'acide fluorhydrique HF.

Dans le cas d'un traitement sous atmosphère fluorante, l'agent fluorant peut être utilisé pur ou en dilution dans un gaz neutre, par exemple de l'azote.

Les conditions de réaction sont choisies de préférence de manière telle que ledit traitement n'induise une fluoration qu'en surface des particules ou des grains constituant la composition (conditions douces). A cet égard, la conduite d'une fluoration jusqu'au coeur des particules ou grains n'apporte pas de résultats substantiellement améliorés par rapport à une fluoration essentiellement de surface. D'une manière pratique, on peut suivre et contrôler expérimentalement le degré d'avancement de la réaction de fluoration, par exemple en mesurant l'évolution de la prise de masse des matériaux (prise de masse induite par l'introduction progressive du fluor).

La composition contenant du zinc peut être obtenue en mettant en présence la composition initiale avec un précurseur du zinc et de l'ammoniaque et/ou un sel d'ammonium. Cette mise en présence permet de faire précipiter le composé du zinc sur les particules ou les grains constituant la composition.

Le précurseur du zinc peut être un oxyde ou un hydroxyde de zinc que l'on utilise en suspension. Ce précurseur peut être aussi un sel de zinc, de préférence un sel soluble. Ce peut être un sel d'acide inorganique comme un chlorure, ou encore un sel d'acide organique comme un acétate.

Différentes variantes de procédé peuvent être envisagées pour la préparation des compositions dont les particules ou les grains comprennent du zinc avec une couche d'oxyde et/ou de fluor.

Selon une première variante, on met en contact la composition initiale, un précurseur du zinc, de l'ammoniaque et/ou un sel d'ammonium et, le cas échéant, un précurseur de l'oxyde transparent et un agent fluorant, et on dépose le composé de zinc sur la composition initiale et, le cas échéant, on précipite l'oxyde transparent sur ladite composition initiale.

Selon une seconde variante, le traitement de fluoration se fait dans une première étape, puis, dans un deuxième temps, on met en contact la composition initiale ainsi traitée, un précurseur du zinc, de l'ammoniaque et/ou un sel d'ammonium et, le cas échéant, un précurseur de l'oxyde transparent, et on dépose le composé de zinc sur la composition initiale et, le cas échéant, on précipite l'oxyde transparent sur ladite composition initiale.

Une troisième variante du procédé est aussi envisageable. Dans ce cas, dans une première étape, on met en contact la composition initiale, un précurseur du zinc , de l'ammoniaque et/ou un sel d'ammonium et, le cas échéant, un précurseur de l'oxyde transparent, et on dépose le composé de zinc sur la composition initiale et, le cas échéant, on précipite l'oxyde transparent sur ladite composition initiale puis, dans une deuxième étape, on effectue le traitement de fluoration.

Une autre variante du procédé est aussi possible. Dans ce cas, dans une première étape, on met en contact la composition initiale et un précurseur de l'oxyde transparent et on précipite l'oxyde transparent sur ladite composition initiale puis, dans une deuxième étape, on met en contact la composition initiale ainsi obtenue avec un précurseur du zinc, de l'ammoniaque et/ou un sel d'ammonium et on dépose le composé de zinc sur la composition initiale.

Dans le cas de cette dernière variante, on peut effectuer le traitement de fluoration lors de l'une des étapes précitées ou avant la première ou après la seconde.

Selon une autre variante intéressante de procédé, la mise en contact entre la composition, le précurseur du zinc , l'ammoniaque et/ou le sel d'ammonium et, le cas échéant, le précurseur de l'oxyde transparent et l'agent fluorant, se fait en présence d'un alcool. L'alcool utilisé est généralement choisi parmi les alcools aliphatiques tel que par exemple le butanol ou l'éthanol. L'alcool peut, en particulier, être apporté avec le précurseur du zinc sous forme d'une solution alcoolique de zinc.

Selon encore une autre variante intéressante de procédé, on met en contact la composition, le précurseur du zinc , l'ammoniaque et/ou le sel d'ammonium et, le cas échéant, le précurseur de l'oxyde transparent et l'agent fluorant, en présence d'un dispersant. Ce dispersant a pour but d'éviter l'agglomération des particules ou grains de la composition lors de leur mise en suspension pour les traitements décrits ci-dessus. Il permet aussi de travailler dans des milieux plus concentrés. Il favorise la formation d'une couche homogène d'oxyde transparent sur l'ensemble des particules.

Ce dispersant peut être choisi dans le groupe des dispersants par effet stérique et notamment des polymères hydrosolubles ou organosolubles non ioniques. On peut citer comme dispersant la cellulose et ses dérivés, les polyacrylamides, les oxydes de polyéthylène, les polyéthylène glycols, les polyoxypropylène glycols polyoxyéthylénés, les polyacrylates, les alkyl phénols polyoxyéthylénés, les alcools à longues chaînes polyoxyéthylénés, les polyvinylalcools, les alkanolamides, les dispersants du type polyvinylpyrrolidone, les composés à base de gomme xanthane.

En outre, on peut noter qu'il peut être intéressant de traiter par ultrasons la suspension obtenue à partir du mélange des réactifs.

Enfin, le produit obtenu à la fin des opérations décrites ci-dessus peut être lavé à l'eau ou à l'alcool. Il peut être aussi séché à l'air ou encore sous vide.

L'invention concerne aussi l'utilisation d'une composition selon l'invention comme pigment colorant pour colorer une matière.

La composition de l'invention possède en effet un bon pouvoir de coloration et un bon pouvoir couvrant et, de ce fait, convient à la coloration de nombreux matériaux, tels que plastiques, peintures et autres.

Ainsi, et plus précisément, elle peut être utilisée dans la coloration de polymères pour matières plastiques qui peuvent être du type thermoplastiques ou thermodurcissables.

Les compositions contenant du zinc sont tout particulièrement adaptées aux applications dans lesquelles elles sont mis en oeuvre à une température relativement élevée et dans des conditions où il y a un risque de dégagement d'$H_2S$ par suite éventuellement d'une hydrolyse partielle du composé soufré. Plus précisément, elles peuvent être utilisées dans la coloration de polymères pour matières plastiques qui peuvent être du type thermoplastiques ou thermodurcissables, ces polymères étant susceptibles de contenir des traces d'eau.

Comme résines thermoplastiques susceptibles d'être colorées selon l'invention, on peut citer, à titre purement illustratif, le chlorure de polyvinyle, l'alcool polyvinylique, le polystyrène, les copolymères styrène-butadiène, styrène-acrylonitrile, acrylonitrile-butadiène-styrène (A.B.S.), les polymères acryliques notamment le polyméthacrylate de méthyle, les polyoléfines telles que le polyéthylène, le polypropylène, le polybutène, le polyméthytpentène, les dérivés cellulosiques tels que par exemple l'acétate de cellulose, l'acéto-butyrate de cellulose, l'éthylcéllulose, les polyamides dont le polyamide 6-6.

Concernant les résines thermodurcissables pour lesquelles la composition selon l'invention convient également, on peut citer, par exemple, les phénoplastes, les aminoplastes notamment les copolymères urée-formol, mélamine-formol, les résines époxy et les polyesters thermodurcissables.

On peut également mettre en oeuvre la composition de l'invention dans des polymères spéciaux tels que des polymères fluorés en particulier le polytétrafluoréthylène (P.T.F.E.), les polycarbonates, les élastomères silicones, les polyimides.

Dans cette application spécifique pour la coloration des plastiques, on peut mettre en oeuvre la composition de l'invention directement sous forme de poudres. On peut également, de préférence, la mettre en oeuvre sous une forme pré-dispersée, par exemple en prémélange avec une partie de la résine, sous forme d'un concentré pâte ou d'un liquide ce qui permet de l'introduire à n'importe quel stade de la fabrication de la résine.

Ainsi, la composition selon l'invention peut être incorporée dans des matières plastiques telles que celles mentionnées ci-avant dans une proportion pondérale allant généralement soit de 0,01 à 5% (ramenée au produit final) soit de 20 à 70% dans le cas d'un concentré.

La composition de l'invention peut être également utilisée dans le domaine des peintures et lasures et plus particulièrement dans les résines suivantes : résines alkydes dont la plus courante est dénommée glycérophtalique; les résines modifiées à l'huile longue ou courte; les résines acryliques dérivées des esters de l'acide acrylique (méthylique ou éthylique) et méthacrylique éventuellement copolymérisés avec l'acrylate d'éthyle, d'éthyl-2 hexyle ou de butyle; les résines vinyliques comme par exemple l'acétate de polyvinyle, le chlorure de polyvinyle, le butyralpolyvinylique, le formalpolyvinylique, et les copolymères chlorure de vinyle et acétate de vinyle ou chlorure de vinylidène; les résines aminoplastes ou phénoliques le plus souvent modifiées; les résines polyesters; les résines polyuréthannes; les résines époxy; les résines silicones.

Généralement, la composition est mise en oeuvre à raison de 5 à 30% en poids de la peinture, et de 0,1 à 5% en poids du lasure.

En outre, la composition selon l'invention est également susceptible de convenir pour des applications dans l'industrie du caoutchouc, notamment dans les revêtements pour sols, dans l'industrie du papier et des encres d'imprimerie, dans le domaine de la cosmétique, ainsi pour de nombreuses autres utilisations comme par exemple, et non limitativement, les teintures, dans les cuirs pour le finissage de ceux-ci et les revêtements stratifiés pour cuisines et autres plans de travail, les céramiques et les glaçures.

La composition de l'invention peut aussi être utilisée dans la coloration des matériaux à base de ou obtenu à partir d'au moins un liant minéral.

Ce liant minéral peut être choisi parmi les liants hydrauliques, les liants aériens, le plâtre et les liants du type sulfate de calcium anhydre ou partiellement hydraté.

Par liants hydrauliques, on entend les substances ayant la propriété de faire prise et de durcir après addition d'eau en formant des hydrates insolubles dans l'eau. Les produits de l'invention s'appliquent tout particulièrement à la coloration des ciments et bien entendu des bétons fabriqués à partir de ces ciments par addition à ceux-ci d'eau, de sable et/ou de graviers.

Dans le cadre de la présente invention, le ciment peut, par exemple, être du type alumineux. On entend par là tout ciment contenant une proportion élevée soit d'alumine en tant que telle soit d'aluminate soit des deux. On peut citer à titre d'exemple les ciments à base d'aluminate de calcium, notamment ceux du type SECAM.

Le ciment peut aussi être du type silicate et plus particulièrement à base de silicate de calcium. On peut donner à titre d'exemple les ciments PORTLAND et, dans ce type de ciments, les Portland à prise rapide ou très rapide, les ciments blancs, ceux résistant aux sulfates ainsi que ceux comprenant des laitiers de hauts-fourneaux et/ou des cendres volantes et/ou du méta-kaolin.

On peut aussi mentionner les ciments à base d'hémihydrate, de sulfate de calcium ainsi que les ciments magnésiens dits ciments de Sorel.

La composition de l'invention s'utilise aussi dans la coloration des liants aériens, c'est à dire des liants durcissant à l'air libre par l'action du $CO_2$, du type oxyde ou hydroxyde de calcium ou de magnésium.

La composition de l'invention s'utilise enfin dans la coloration du plâtre et des liants du type sulfate de calcium anhydre ou partiellement hydraté ($CaSO_4$ et $CaSO_4$, $1/2H_2O$).

Enfin, l'invention concerne des compositions de matière colorées notamment du type plastiques, peintures, lasures, caoutchoucs, céramiques, glaçures, papiers, encres, produits cosmétiques, teintures, cuirs, revêtements stratifiés ou du type à base ou obtenu à partir d'au moins un liant minéral, qui comprennent comme pigment colorant, une composition selon l'invention.

Des exemples vont maintenant être donnés.

Pour l'ensemble des exemples donnés ci-dessous, les définitions et modes opératoires suivants s'appliquent.

Préparation des produits

On utilise comme produit de départ 10g d'un hydroxycarbonate de samarium ou un hydroxycarbonate mixte de samarium et de la terre rare trivalente dont on a effectué une imprégnation par un carbonate de l'élément alcalin en solution. Les quantités de réactifs sont déterminées en fonction de la stoechiométrie du produit final recherché. Le produit de départ est ensuite porté à 800°C pendant 1 heure sous un balayage continu à un débit de 6l/h d'un mélange gazeux contenant de l'argon, du sulfure d'hydrogène et du sulfure de carbone (Ar 50%, $H_2S$ 20% et $CS_2$ 30% en volume).

A l'issue de la calcination, le produit est désaggloméré dans des conditions douces au jet d'air.

Granulométrie

La granulométrie a été déterminée selon la technique Cilas précitée. On précise en plus que la mesure a été effectuée sur une dispersion du produit dans une solution aqueuse à 0,05% en poids d'hexamétaphosphate de sodium et qui a préalablement subi un passage à la sonde à ultrasons (sonde avec embout de 13mm de diamètre, 20KHz, 120W) pendant 3 minutes. On entend par indice de dispersion le rapport :

$$\sigma/m = (d_{90}-d_{10})/2d_{50}$$

dans lequel :

- $d_{90}$ est le diamètre des particules pour lequel 90% des particules ont un diamètre inférieur à $d_{90}$;
- $d_{10}$ est le diamètre des particules pour lequel 10% des particules ont un diamètre inférieur à $d_{10}$;
- $d_{50}$ est le diamètre moyen des particules.

Coordonnées chromatiques

Les coordonnées chromatiques L*, a* et b* sont données ici et pour le reste de la description dans le système CIE 1976 (L*, a* et b*) tel que défini par la Commission Internationale d'Eclairage et répertorié dans le Recueil des Normes Françaises (AFNOR), couleur cotorimétrique n° X08-12, n° X08-14 (1983). Elles sont déterminées pour ce qui concerne les mesures faites sur les produits et les plastiques au moyen d'un colorimètre commercialisé par la Société Pacific Scientific. La nature de l'illuminant est le D65. La surface d'observation est une pastille circulaire de 12,5 $cm^2$ de surface. Les conditions d'observations correspondent à une vision sous un angle d'ouverture de 10°. Dans les mesures données, la composante spéculaire est exclue pour les poudres et inclue pour les plaquettes.

R400 et R700 représentent la réflectance à 400nm et à 700nm dans les conditions de mesure précitées.

Injection dans le plastique :

Le produit est incorporé en cube tournant dans une proportion en poids de 1% dans du polypropylène de référence ELTEX ® PHV 001. Le mélange est ensuite injecté à 220°C à l'aide d'une presse à injecter KAPSA modèle Protoject 10/10 avec un cycle de 41 s. Le moule est maintenu à la température de 35°C.

On obtient ainsi une éprouvette parallélépipédique à double épaisseur (2 et 4 mm).

Les coordonnées chromatiques sont mesurées sur la partie épaisse de la plaquette et sur fond blanc.

EXEMPLE 1

Cet exemple concerne la préparation d'un sulfure $\gamma$-$Sm_2S_3$ dopé au lithium. Le rapport Li/Sm est de 0,15 et on utilise un hydroxycarbonate de samarium obtenu à partir de samarium de pureté 99,9%.

La granulométrie obtenue est de 0,7$\mu$m ($\sigma$/m=1,7).

Les coordonnées chromatiques déterminées dans le système CIE Lab sont :
L*/a*/b*/R400/R700=84,7/-2,6/77,2/5,9/82,7

Après injection dans du polypropylène (teneur en pigment = 1%) les coordonnées chromatiques deviennent :
L*/a*/b*=84,5/-2,7/78,3

EXEMPLE 2

Cet exemple concerne la préparation d'un sulfure $\gamma$-$Sm_2S_3$ dopé au sodium. Le rapport Na/Sm est de 0,2 et on utilise un hydroxycarbonate de samarium obtenu à partir de samarium de pureté 99,9%.

La granulométrie obtenue est de 0,6μm ($\sigma$/m=0,5).

Les coordonnées chromatiques déterminées dans le système CIE Lab sont :
L*/a*/b*/R400/R700=87,2/-4,1/76,3/5,9/86,4

Après injection dans du polypropylène (teneur en pigment = 1 %) les coordonnées chromatiques deviennent :
L*/a*/b*=86,9/-4,3/78,8

EXEMPLE 3

Cet exemple concerne la préparation d'un sulfure $\gamma$-$(Sm_{0,9} La_{0,1})_2S_3$ dopé au lithium. Le rapport Li/Sm est de 0,15 et on utilise un hydroxycarbonate mixte de samarium et de lanthane (90% Sm / 10% La) obtenu avec un samarium de pureté 98,5%.

La granulométrie obtenue est de 1,1μm ($\sigma$/m=1,7).

Les coordonnées chromatiques déterminées dans le système CIE Lab sont:
L*/a*/b*/R400/R700=86,1/-2,9/78,2/5,7/86,9

Après injection dans du polypropylène (teneur en pigment = 1 %) les coordonnées chromatiques deviennent :
L*/a*/b*=85/-1,4/78,4

EXEMPLE 4

Cet exemple concerne la préparation d'un sulfure $\gamma$-$(Sm_{0,5} La_{0,5})_2S_3$ dopé au lithium. Le rapport Li/Sm est de 0,15 et on utilise un hydroxycarbonate mixte de samarium et de lanthane (50%Sm/50%La) obtenu à partir de samarium de pureté 99,9%.

La granulométrie obtenue est de 1,8μm ($\sigma$/m=1,2).

Les coordonnées chromatiques déterminées dans le système CIE Lab sont :
L*/a*/b*/R400/R700=86,4/-2,5/76,6/6,2/85,8

Après injection dans du polypropylène les coordonnées chromatiques deviennent :
L*/a*/b*=85,4/-4/76,1

Les exemples suivants concernent des produits ayant subi après leur préparation des traitements complémentaires pour obtenir une couche d'un oxyde transparent, pour introduire du zinc et, éventuellement, du fluor.

Le traitement pour le dépôt de la couche d'oxyde et l'introduction de zinc est le suivant.

La polyvinylpyrrolidone (PVP) est dissoute dans l'éthanol.

A cette solution est ajouté le sulfure de samarium fluoré ou non, ensuite la solution d'ammoniaque, enfin le précurseur du zinc. Le silicate d'éthyle est introduit de façon continue pendant deux heures. Après la fin d'introduction du silicate d'éthyle, on effectue un mûrissement de deux heures. Les particules ainsi obtenues sont lavées à l'éthanol par filtration puis séchées à 50°C pendant douze heures.

EXEMPLE 5

Cet exemple concerne un $\gamma$-$Sm_2S_3$ dopé au sodium (Na/Sm=0,2) avec du samarium de pureté 99,9%.

On utilise les réactifs dans les proportions suivantes :

|  | g de produit/kg de suspension |
|---|---|
| Sulfure de Samarium | 200 |
| Ethanol (95%) | 643 |
| Ammoniaque (32%) | 100 |
| Oxyde de zinc | 20 |
| Silicate d'éthyle | 32 |
| PVP K10 (Société Aldrich) Mw=10000 | 5 |

Le sulfure de samarium utilisé est un sulfure de samarium de structure $\gamma$ cubique ($Th_3P_4$), dopé au sodium

dans un rapport atomique Na/Sm de 0,2. Ce sulfure a été préalablement fluoré de la manière suivante. 10g de produit sont introduits dans 100ml d'une solution de fluorure d'ammonium (5% en masse par rapport à $Sm_2S_3$).

Par ajout d'une solution d'ammoniaque, on porte le pH du mélange à 8 et on laisse le milieu sous agitation pendant une heure. Le produit est ensuite filtré, puis séché dans un dessiccateur sous vide.

On traite le produit ainsi obtenu en mettant en oeuvre les conditions opératoires données plus haut en utilisant l'ammoniaque.

Le produit obtenu présente les coordonnées chromatiques suivantes:

L*/a*/b*/R400/R700=82/-1,4/71,6/7/76,3

et une granulométrie de 1,7μm (σ/m=1,2).

Après injection dans du polypropylène les coordonnées chromatiques deviennent :

L*/a*/b*=83,4/-2,8/77,8

EXEMPLE 6

Cet exemple concerne un sulfure γ-$Sm_2S_3$ dopé au sodium (Na/Sm=0,2) avec du samarium de pureté 99,9%

On utilise les réactifs dans les proportions suivantes :

|  | g de produit/kg de suspension |
| --- | --- |
| Sulfure de Samarium | 200 |
| Ethanol (95%) | 643 |
| Ammoniaque (32%) | 100 |
| Oxyde de zinc | 20 |
| Silicate d'éthyle | 32 |
| PVP K10 (Société Aldrich) Mw=10000 | 5 |

Le sulfure de samarium utilisé est un sulfure de samarium de structure g cubique ($Th_3P_4$), dopé au sodium dans un rapport atomique Na/Sm de 0,2. Ce sulfure n'a pas été préalablement fluoré. On traite le produit en mettant en oeuvre les conditions opératoires données plus haut en utilisant l'ammoniaque.

Le produit obtenu présente les coordonnées chromatiques suivantes:

L*/a*/b*/R400/R700=82,5/-2,2/71,5/6,7/76,7

et une granulométrie de 1,1μm (σ/m=1,1).

Après injection dans du polypropylène les coordonnées chromatiques deviennent :

L*/a*/b*=83,1/-1,3/77,8

**Revendications**

1. Sesquisulfure de samarium, **caractérisé en ce qu'**il présente une couleur jaune, une pureté en samarium vis à vis d'autres terres rares supérieure à 99% et **en ce qu'**il contient au moins un élément alcalin ou alcalino-terreux dont une partie au moins est incluse dans le réseau cristallin dudit sesquisulfure.

2. Sesquisulfure de samarium selon la revendication 1, **caractérisé en ce qu'**il présente une pureté en samarium vis à vis d'autres terres rares d'au moins 99,5%.

3. Sesquisulfure de samarium selon la revendication 1 ou 2, **caractérisé en ce qu'**il présente une pureté en samarium vis à vis d'autres terres rares d'au moins 99,9%.

4. Sesquisulfure de samarium **caractérisé en ce qu'**il est à base de samarium et d'au moins une terre rare qui est seulement trivalente et **en ce qu'**il présente une couleur jaune et contient au moins un élément alcalin ou alcalino-terreux dont une partie au moins est incluse dans le réseau cristallin dudit sesquisulfure.

5. Sesquisulfure de samarium selon la revendication 4, **caractérisé en ce que** le rapport atomique terre rare trivalente/ terre rare trivalente et samarium est d'au plus 90%, plus particulièrement d'au plus 50%.

**6.** Sesquisulfure de samarium selon la revendication 4 ou 5, **caractérisé en ce que** la terre rare trivalente précitée est le lanthane, le gadolinium ou le dysprosium.

**7.** Sesquisulfure de samarium selon l'une des revendications 1 à 3, **caractérisé en ce qu'**il présente une teneur en cérium inférieure à 1%.

**8.** Sesquisulfure de samarium selon l'une des revendications précédentes, **caractérisée en ce que** l'élément alcalin est le lithium ou le sodium.

**9.** Sesquisulfure de samarium selon l'une des revendications précédentes, **caractérisée en ce que** le sequisulfure est constitué essentiellement de grains entiers de taille moyenne d'au plus 1,5μm.

**10.** Sesquisulfure de samarium selon l'une des revendications précédentes, **caractérisé en ce qu'**il comprend en surface des particules le constituant, une couche à base d'au moins un oxyde transparent.

**11.** Sesquisulfure de samarium selon la revendication 10, **caractérisée en ce que** l'oxyde transparent est choisi parmi la silice, l'alumine, la zircone, l'oxyde de titane, le zircon et les oxydes de terres rares.

**12.** Sesquisulfure de samarium selon l'une des revendications précédentes, **caractérisé en ce qu'**il comprend en outre des atomes de fluor, les atomes de fluor pouvant être plus particulièrement distribués selon un gradient décroissant de la surface au coeur des particules constituant le sesquisulfure de samarium.

**13.** Sesquisulfure de samarium selon l'une des revendications précédentes, **caractérisé en ce qu'**il comprend en outre un composé du zinc, ce composé du zinc pouvant être plus particulièrement déposé à la surface des particules le constituant.

**14.** Sesquisulfure de samarium selon la revendication 13, **caractérisée en ce que** le composé du zinc a été obtenu par réaction d'un précurseur du zinc avec de l'ammoniaque et/ou un sel d'ammonium.

**15.** Procédé de préparation d'un sesquisulfure de samarium selon la revendication 1, 2 ou 3, **caractérisé en ce qu'**on fait réagir un composé du samarium présentant une pureté en samarium vis à vis d'autres terres rares supérieure à 99%, d'au moins 99,5% ou d'au moins 99,9% selon le sesquisulfure de samarium recherchée, avec au moins un composé d'un élément alcalin ou alcalino-terreux avec un mélange gazeux de sulfure d'hydrogène et de sulfure de carbone.

**16.** Procédé de préparation d'un sesquisulfure de samarium selon la revendication 4, 5 ou 6, **caractérisé en ce qu'**on fait réagir un composé du samarium, un composé de la terre rare trivalente et au moins un composé d'un élément alcalin ou alcalino-terreux avec un mélange gazeux de sulfure d'hydrogène et de sulfure de carbone.

**17.** Procédé de préparation d'un sesquisulfure de samarium selon la revendication 7, **caractérisé en ce qu'**on fait réagir un composé du samarium présentant une pureté en samarium telle que la teneur en cérium soit inférieure à 1%, et au moins un composé d'un élément alcalin ou alcalino-terreux avec un mélange gazeux de sulfure d'hydrogène et de sulfure de carbone.

**18.** Procédé selon la revendication 15, 16 ou 17, **caractérisé en ce qu'**on utilise comme composé du samarium et éventuellement de la terre rare trivalente, un carbonate ou un hydroxycarbonate.

**19.** Procédé de préparation d'un sesquisulfure de samarium selon la revendication 10 ou 11, **caractérisé en ce qu'**on met en contact le sesquisulfure de samarium initiale avec un précurseur de l'oxyde transparent précité et on précipite l'oxyde transparent.

**20.** Procédé de préparation d'un sesquisulfure de samarium selon la revendication 12, **caractérisé en ce qu'**on soumet le sesquisulfure de samarium initial à un traitement de fluoration.

**21.** Procédé de préparation d'un sesquisulfure de samarium selon la revendication 13 ou 14, **caractérisé en ce qu'**on met en présence le sesquisulfure de samarium initial avec un précurseur du zinc et de l'ammoniaque et/ou un sel d'ammonium.

**22.** Procédé pour colorer une matière, **caractérisé en ce qu'**on utilise comme pigment colorant un sesquisulfure de samarium selon l'une des revendications 1 à 14.

**23.** Procédé selon la revendication 22, **caractérisé en ce qu'**on utilise le sesquisulfure de samarium précitée comme pigment dans des matières plastiques, des peintures, des lasures, des caoutchoucs, des céramiques, des glaçures, des papiers, des encres, des produits cosmétiques, des teintures, des cuirs, des revêtements stratifiés et des matériaux à base ou obtenus à partir d'au moins un liant minéral.

**24.** Compositions de matière colorées notamment du type plastiques, peintures, lasures, caoutchoucs, céramiques, glaçures, papiers, encres, produits cosmétiques, teintures, cuirs, revêtements stratifiés ou du type à base ou obtenus à partir d'au moins un liant minéral, **caractérisées en ce qu'**elles comprennent, comme pigment colorant, une Sesquisulfure de samarium selon l'une des revendications 1 à 14.

**Patentansprüche**

**1.** Samariumsesquisulfid, **dadurch gekennzeichnet, daß** es eine gelbe Farbe, eine Reinheit an Samarium gegenüber anderen Seltenen Erden von über 99 % aufweist, und dadurch, daß es mindestens ein Alkalielement oder Erdalkalielement enthält, von dem mindestens ein Teil in dem Kriscallgerüst des genannten Sesquisulfids eingeschlossen ist.

**2.** Samariumsesquisulfid nach Anspruch 1, **dadurch gekennzeichnet, daß** es eine Reinheit an Samarium gegenüber anderen Seltenen Erden von mindestens 99,5 % aufweist.

**3.** Samariumsesquisulfid nach Anspruch 1 oder 2, **dadurch gekennzeichnet, daß** es eine Reinheit an Samarium gegenüber anderen Seltenen Erden von mindestens 99,9 % aufweist.

**4.** Samariumsesquisulfid, **dadurch gekennzeichnet, daß** es auf der Basis von Samarium und mindestens einer Seltenen Erde besteht, die nur trivalent ist, und dadurch, daß es eine gelbe Farbe aufweist und mindestens ein Alkalielement oder Erdalkalielement enthält, von dem mindestens ein Teil in dem Kristallgerüst des genannten Sesquisulfids eingeschlossen ist.

**5.** Samariumsesquisulfid nach Anspruch 4, **dadurch gekennzeichnet, daß** das Atomverhältnis trivalente Seltene Erde/trivalente Seltene Erde und Samarium höchstens 90 % und insbesondere höchstens 50 % beträgt.

**6.** Samariumsesquisulfid nach Anspruch 4 oder 5, **dadurch gekennzeichnet, daß** die oben genannte trivalente Seltene Erde Lanthan, Gadolinium oder Dysprosium ist.

**7.** Samariumsesquisulfid nach einem der Ansprüche 1 bis 3, **dadurch gekennzeichnet, daß** es einen Gehalt an Cerium von unter 1 % aufweist.

**8.** Samariumsesquisulfid nach einem der vorstehenden Ansprüche, **dadurch gekennzeichnet, daß** das Alkalielement Lithium oder Natrium ist.

**9.** Samariumsesquisulfid nach einem der vorstehenden Ansprüche, **dadurch gekennzeichnet, daß** das Sesquisulfid im wesentlichen aus ganzen Körnern mit einer mittleren Größe von höchstens 1,5 µm besteht.

**10.** Samariumsesquisulfid nach einem der vorstehenden Ansprüche, **dadurch gekennzeichnet, daß** es an der Oberfläche der Teilchen, die es bilden, eine Schicht auf der Basis von mindestens einem transparenten Oxid umfaßt.

**11.** Samariumsesquisulfid nach Anspruch 10, **dadurch gekennzeichnet, daß** das transparente Oxid unter Siliciumdioxid, Aluminiumoxid, Zirkoniumdioxid, Titanoxid, zirkon und den Oxiden der Seltenen Erden ausgewählt wird.

**12.** Samariumsesquisulfid nach einem der vorstehenden Ansprüche, **dadurch gekennzeichnet, daß** es außerdem Atome von Fluor umfaßt, wobei die Fluoratome ganz besonders gemäß einem Gradienten verteilt sein können, der von der Oberfläche zum Kern der Teilchen hin, die das Sesquisulfid bilden, abnimmt.

**13.** Samariumsesquisulfid nach einem der vorstehenden Ansprüche, **dadurch gekennzeichnet, daß** es außerdem

**EP 1 019 323 B1**

eine Verbindung von Zink umfaßt, die in besonderer Weise auf der Oberfläche der Teilchen, die es bilden, aufgebracht ist.

14. Samariumsesquisulfid nach Anspruch 13, **dadurch gekennzeichnet, daß** die Zinkverbindung durch Reaktion eines Vorläufers von Zink mit Ammoniak und/oder einem Ammoniumsalz erhalten wurde.

15. Verfahren zur Herstellung eines Samariumsesquisulfids nach Anspruch 1, 2 oder 3, **dadurch gekennzeichnet, daß** man eine Samariumverbindung, die eine Reinheit an Samarium gegenüber anderen Seltenen Erden von über 99 %, mindestens 99,5 % oder mindestens 99,9 % je nach dem gesuchten Samariumsesquisulfid aufweist, mit mindestens einer Verbindung eines Alkalielementes oder Erdalkalielementes und mit einer gasförmigen Mischung von Schwefelwasserstoff und Schwefelkohlenstoff zur Reaktion bringt.

16. Verfahren zur Herstellung eines Samariumsesquisulfids nach Anspruch 4, 5 oder 6, **dadurch gekennzeichnet, daß** man eine Samariumverbindung, eine Verbindung der trivalenten Seltenen Erde und mindestens eine Verbindung eines Alkalielementes oder Erdalkalielementes mit einer gasförmigen Mischung von Schwefelwasserstoff und Schwefelkohlenstoff zur Reaktion bringt.

17. Verfahren zur Herstellung eines Samariumsesquisulfids nach Anspruch 7, **dadurch gekennzeichnet, daß** man eine Samariumverbindung, die eine solche Reinheit an Samarium aufweist, daß der Gehalt an Cerium unter 1 % liegt, und mindestens eine Verbindung eines Alkalielementes oder Erdalkalielementes mit einer gasförmigen Mischung von Schwefelwasserstoff und Schwefelkohlenstoff zur Reaktion bringt.

18. Verfahren nach Anspruch 15, 16 oder 17, **dadurch gekennzeichnet, daß** man als Verbindung von Samarium und gegebenenfalls der trivalenten Seltenen Erde ein Carbonat oder ein Hydroxycarbonat verwendet.

19. Verfahren zur Herstellung eines Samariumsesquisulfids nach Anspruch 10 oder 11, **dadurch gekennzeichnet, daß** man das Samariumsesquisulfid als Ausgangsprodukt mit einem Vorläufer des oben genannten transparenten Oxids in Kontakt bringt und das transparente Oxid ausfällt.

20. Verfahren zur Herstellung eines Samariumsesquisulfids nach Anspruch 12, **dadurch gekennzeichnet, daß** man das Samariumsesquisulfid als Ausgangsprodukt einer Behandlung zur Fluorierung unterzieht.

21. Verfahren zur Herstellung eines Samariumsesquisulfids nach Anspruch 13 oder 14, **dadurch gekennzeichnet, daß** man das Samariumsesquisulfid als Ausgangsprodukt mit einem Vorläufer von Zink und Ammoniak und/oder einem Ammoniumsalz zusammenbringt.

22. Verfahren zum Einfärben eines Materials, **dadurch gekennzeichnet, daß** man als Farbpigment ein Samariumsesquisulfid nach einem der Ansprüche 1 bis 14 verwendet.

23. Verfahren nach Anspruch 22, **dadurch gekennzeichnet, daß** man das oben genannte Samariumsesquisulfid als Pigment verwendet in Kunststoffen, Anstrichstoffen, Lasuren, Kautschuks, Keramiken, Glasuren, Papieren, Tinten, kosmetischen Produkten, Färbemitteln, Leder, schichtförmigen Überzügen und Materialien auf der Basis von mindestens einem mineralischen Bindemittel oder solchen, die ausgehend von mindestens einem mineralischen Bindemittel erhalten wurden.

24. Gefärbte Material-Zusammensetzungen, insbesondere vom Typ der Kunststoffe, Anstrichstoffe, Lasuren, Kautschuks, Keramiken, Glasuren, Papiere, Tinten, kosmetischen Produkte, Färbemittel, Leder, schichtförmigen Überzüge oder von dem Typ auf der Basis von mindestens einem mineralischen Bindemittel oder solchen, die ausgehend von mindestens einem mineralischen Bindemittel erhalten wurden, **dadurch gekennzeichnet, daß** sie als Farbpigment ein Samariumsesquisulfid nach einem der Ansprüche 1 bis 14 umfassen.

**Claims**

1. Samarium sesquisulphide **characterised in that** it is yellow in colour, and has a purity in respect of samarium in relation to other rare earths of higher than 89%, and that it contains at least one alkali metal or alkaline earth element of which a part at least is included in the crystal lattice of said sesquisulphide.

**2.** A samarium sesquisulphide according to claim 1 **characterised in that** it has a purity in respect of samarium in relation to other rare earths of at least 99.5%.

**3.** A samarium sesquisulphide according to claim 1 or claim 2 **characterised in that** it has a purity in respect of samarium in relation to other rare earths of at least 99.9%.

**4.** A samarium sesquisulphide **characterised in that** it is based on samarium and at least one rare earth which is only trivalent and that it is yellow in colour and that it contains at least one alkali metal or alkaline earth element of which a part at least is included in the crystal lattice of said sesquisulphide.

**5.** A samarium sesquisulphide according to claim 4 **characterised in that** the trivalent rare earth/trivalent rare earth and samarium atomic ratio is at most 90%, more particularly at most 50%.

**6.** A samarium sesquisulphide according to claim 4 or claim 5 **characterised in that** said trivalent rare earth is lanthanum, gadolinium or dysprosium.

**7.** A samarium sesquisulphide according to one of claims 1 to 3 **characterised in that** it has a cerium content of less than 1%.

**8.** A samarium sesquisulphide according to one of the preceding claims **characterised in that** the alkali metal element is lithium or sodium.

**9.** A samarium sesquisulphide according to one of the preceding claims **characterised in that** the sesquisulphide is essentially formed by whole grains of a mean size of at most 1.5 μm.

**10.** A samarium sesquisulphide according to one of the preceding claims **characterised in that** it comprises at the surface of the particles constituting it a layer based on at least one transparent oxide.

**11.** A samarium sesquisulphide according to claim 10 **characterised in that** the transparent oxide is selected from silica, alumina, zirconia, titanium oxide, zircon and rare earth oxides.

**12.** A samarium sesquisulphide according to one of the preceding claims **characterised in that** it further comprises atoms of fluorine, wherein the fluorine atoms can be more particularly distributed in accordance with a falling gradient from the surface to the heart of the particles constituting the samarium sesquisulphide.

**13.** A samarium sesquisulphide according to one of the preceding claims **characterised in that** it further comprises a compound of zinc, which compound of zinc can be more particularly deposited at the surface of the particles constituting it.

**14.** A samarium sesquisulphide according to claim 13 **characterised in that** the compound of zinc was obtained by the reaction of a precursor of zinc with ammonia and/or an ammonium salt.

**15.** A process for the preparation of a samarium sesquisulphide according to claim 1, claim 2 or claim 3 **characterised by** reacting a compound of samarium having a purity in respect of samarium in relation to other rare earths of higher than 99%, at least 99.5% or at least 99.9% according to the samarium sesquisulphide sought, with at least one compound of an alkali metal or alkaline earth element, with a gaseous mixture of hydrogen sulphide and carbon disulphide.

**16.** A process for the preparation of a samarium sesquisulphide according to claim 4, claim 5 or claim 6 **characterised by** reacting a compound of samarium, a compound of the trivalent rare earth and at least one compound of an alkali metal or alkaline earth element with a gaseous mixture of hydrogen sulphide and carbon disulphide.

**17.** A process for the preparation of a samarium sesquisulphide according to claim 7 **characterised by** reacting a compound of samarium having a purity in respect of samarium such that the cerium content is less than 1% and at least one compound of an alkali metal or alkaline earth element with a gaseous mixture of hydrogen sulphide and carbon disulphide.

**18.** A process according to claim 15, claim 16 or claim 17 **characterised in that** a carbonate or a hydroxycarbonate

**EP 1 019 323 B1**

is used as the compound of samarium and optionally the trivalent rare earth.

**19.** A process for the preparation of a samarium sesquisulphide according to claim 10 or claim 11 **characterised in that** the initial samarium sesquisulphide is brought into contact with a precursor of said transparent oxide and the transparent oxide is precipitated.

**20.** A process for the preparation of a samarium sesquisulphide according to claim 12 **characterised in that** the initial samarium sesquisulphide is subjected to a fluorination treatment.

**21.** A process for the preparation of a samarium sesquisulphide according to claim 13 or claim 14 **characterised in that** the initial samarium sesquisulphide is brought together with a precursor of the zinc and ammonia and/or an ammonium salt.

**22.** A process for colouring a material **characterised in that** the colouring pigment used is a samarium sesquisulphide according to one of claims 1 to 14.

**23.** A process according to claim 22 **characterised by** using said samarium sesquisulphide as a pigment in plastic materials, paints, varnishes, rubbers, ceramics, glazes, papers, inks, cosmetic products, dyes, leathers, stratified coatings and materials based on or obtained from at least one mineral binder.

**24.** Coloured compositions of material in particular of the type comprising plastics, paints, varnishes, rubbers, ceramics, glazes, papers, inks, cosmetic products, dyes, leathers and stratified coatings or of the type based on or obtained from at least one mineral binder, **characterised in that** as a colouring pigment they comprise a samarium sesquisulphide according to one of claims 1 to 14.